(19) Europäisches Patentamt
European Patent Office
Office européen des brevets

(11) Veröffentlichungsnummer: **0 056 958**
**A1**

# (12) EUROPÄISCHE PATENTANMELDUNG

(21) Anmeldenummer: 82100250.8

(22) Anmeldetag: 15.01.82

(51) Int. Cl.³: C 07 F 9/60
A 01 N 57/16, A 01 N 57/24

(30) Priorität: 27.01.81 DE 3102519

(43) Veröffentlichungstag der Anmeldung:
04.08.82 Patentblatt 82/31

(84) Benannte Vertragsstaaten:
AT BE CH DE FR GB IT LI NL

(71) Anmelder: BAYER AG
Zentralbereich Patente, Marken und Lizenzen
D-5090 Leverkusen 1, Bayerwerk(DE)

(72) Erfinder: Schrader, Gerhard, Dr.
Kohlfurter Strasse 75
D-5600 Wuppertal 12(DE)

(72) Erfinder: Hammann, Ingeborg, Dr.
Belfortstrasse 9
D-5000 Köln(DE)

(72) Erfinder: Homeyer, Bernhard, Dr.
Obere Strasse 28
D-5090 Leverkusen 3(DE)

**(54) O-Chinolin-O-alkyl-thiono(thiol)-phosphor(phosphon)-säureester, sie enthaltende Schädlingsbekämpfungsmittel, Verfahren zu ihrer Herstellung und ihre Verwendung.**

(57) Neue O-Chinolin-3-yl-O-alkyl-thiono(thiol)-phosphor-(phosphon)-säureester der Formel I

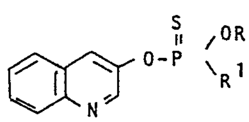

(I)

in welcher
R für gegebenenfalls substituiertes Alkyl steht und
$R^1$ für gegebenenfalls substituiertes Alkyl, Alkoxy oder Alkylthio steht,
werden durch die Umsetzung von 3-Hydroxy-chinolin der Formel II

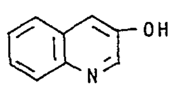

(II)

mit O-Alkyl-thiono(thiol)-phosphor(phosphon)-säureester-chloriden der Formel III

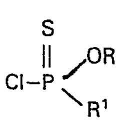

(III)

in welcher
R und $R^1$ die oben angegebene Bedeutung haben, erhalten.

Die neuen Verbindungen können als Schädlingsbekämpfungsmittel, insbesondere als Insektizide und Akarizide verwendet werden.

EP 0 056 958 A1

0056958

BAYER AKTIENGESELLSCHAFT 5090 Leverkusen, Bayerwerk

Zentralbereich
Patente, Marken und Lizenzen S/Kü-c
Ia

O-Chinolin-O-alkyl-thiono(thiol)-phosphor(phosphon)-säureester, sie enthaltende Schädlingsbekämpfungsmittel, Verfahren zu ihrer Herstellung und ihre Verwendung

Die Erfindung betrifft neue O-Chinolin-3-yl-O-alkyl-thiono(thiol)-phosphor(phosphon)-säureester, ein Verfahren zu deren Herstellung, sie enthaltende Schädlingsbekämpfungsmittel, ihre Herstellung und Verwendung als Schädlingsbekämpfungsmittel, insbesondere als Insektizide und Akarizide.

Es ist bekannt, daß bestimmte O-(4-Methyl-chinolin-2-yl)-O-alkyl-thionophosphor(phosphon)-säureester, wie z.B. O-(4-Methyl-chinolin-2-yl)-O,O-diethyl-thionophosphorsäureester und O-(4-Methyl-chinolin-2-yl)-O-ethyl-thionobenzolphosphonsäureester, zur Bekämpfung von Arthropoden verwendet werden können (vergleiche Deutsche Offenlegungsschrift 1 670 823). Die insektizide und akarizide Wirkung der bekannten Verbindungen ist jedoch, insbesondere bei niedrigen Wirkstoffkonzentrationen und Aufwandmengen, nicht immer zufriedenstellend.

Es wurden nun neue O-Chinolin-3-yl-O-alkyl-thiono(thiol)-phosphor(phosphon)-säureester der Formel I

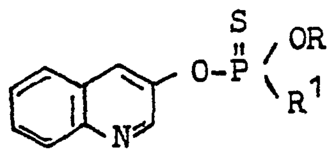

(I)

gefunden, in welcher

R für gegebenenfalls substituiertes Alkyl steht und

$R^1$ für gegebenenfalls substituiertes Alkyl, Alkoxy oder Alkylthio steht.

Man erhält die neuen Verbindungen der Formel (I), wenn man 3-Hydroxy-chinolin der Formel II

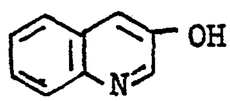

(II)

mit O-Alkyl-thiono(thiol)-phosphor(phosphon)-säureester-chloriden der Formel III

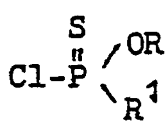

(III)

in welcher

R und $R^1$ die oben angegebene Bedeutung haben,

gegebenenfalls in Gegenwart von Säureakzeptoren und von Verdünnungsmitteln umsetzt.

Die neuen O-Chinolin-3-yl-O-alkyl-thiono(thiol)-phosphor(phosphon)-säureester der Formel (I) zeichnen sich durch hohe Wirksamkeit gegen tierische Schädlinge, insbesondere durch hohe insektizide und akarizide Wirksamkeit aus.

Überraschenderweise zeigen die erfindungesgemäßen Verbindungen der Formel (I) erheblich höhere insektizide und akarizide Wirkung als entsprechende bekannte Verbindungen.

Die Erfindung betrifft insbesondere Verbindungen der Formel (I), in welcher

R für gegebenenfalls substituiertes Alkyl mit 1 bis 5 Kohlenstoffatomen steht und

$R^1$ für gegebenenfalls substituiertes Alkyl, Alkoxy oder Alkylthio mit jeweils 1 bis 5 Kohlenstoffatomen steht.

Alkyl R und $R^1$ sowie Alkoxy und Alkylthio $R^1$ können einen oder mehrere, vorzugsweise 1 bis 3, insbesondere 1 oder 2 gleiche oder verschiedene Substituenten tragen, wie sie üblicherweise bei insektiziden und akariziden Phosphorderivaten zu finden sind. Beispielsweise seien genannt: Halogene, wie Fluor, Chlor und Brom, Cyano sowie Alkoxy und Alkylthio mit vorzugsweise 1 bis 5, insbesondere 1 bis 3 Kohlenstoffatomen.

Bevorzugt sind die Reste R und $R^1$ unsubstituiert und enthalten jeweils 1 bis 5, insbesondere 1 bis 3 Kohlenstoffatome, wobei die Alkylreste geradkettig oder verzweigt sein können.

Besonders bevorzugt stehen R für Methyl oder Ethyl und $R^1$ für Methyl, Ethyl, Methoxy, Ethoxy, n- oder i-Propoxy, Methylthio, Ethylthio und n- oder i-Propylthio.

Insbesondere stehen R für Ethyl und $R^1$ für Ethyl, Ethoxy oder n-Propylthio.

Verwendet man beispielsweise O-Ethyl-thionomethanphosphonsäureesterchlorid und 3-Hydroxy-chinolin als Ausgangsstoffe, so kann die Reaktion dieser Verbindungen durch folgendes Formelschema skizziert werden:

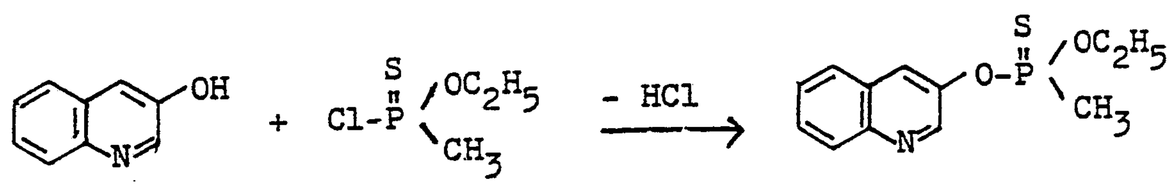


Das beim erfindungsgemäßen Verfahren als Ausgangsstoff zu verwendende 3-Hydroxy-chinolin ist bereits bekannt (vergleiche J.Org.Chem. 18 (1953), 552).

Die weiterals Ausgangsstoffe zu verwendenden O-Alkyl-thiono(thiol)-phosphor(phosphon)-säureesterchloride sind durch Formel (III) definiert. In dieser Formel haben die Reste R und $R^1$ vorzugsweise die oben bei der Definition dieser Reste für die Verbindungen der Formel (I) als bevorzugt angegebene Bedeutung.

Als Beispiele für die Verbindungen der Formel (III) seien genannt:
O-Methyl-, O-Ethyl-, O-n-Propyl-, O-iso-Propyl-, O-n-Butyl-, O-iso-Butyl- und O-sec-Butyl-thionomethanphosphonsäureesterchlorid;
O-Methyl-, O-Ethyl-, O-n-Propyl-, O-iso-Propyl-, O-n-Butyl-, O-iso-Butyl- und O-sec-Butyl-thionoethanphosphonsäureesterchlorid;
O-Methyl-, O-Ethyl-, O-n-Propyl-, O-iso-Propyl-, O-n-Butyl-, O-iso-Butyl- und O-sec-Butyl-thionopropanphosphonsäureesterchlorid;
O-Methyl-, O-Ethyl-, O-n-Propyl-, O-iso-Propyl-, O-n-Butyl-, O-iso-Butyl- und O-sec-Butyl-thionobutanphosphonsäureesterchlorid;
O,O-Dimethyl-, O,O-Diethyl-, O,O-Di-n-propyl-, O,O-Di-n-butyl-, O-Methyl-O-ethyl-, O-Methyl-O-n-propyl-, O-Methyl-O-iso-propyl-, O-Methyl-O-n-butyl-, O-Methyl-O-iso-butyl-, O-Ethyl-O-n-propyl-, O-Ethyl-O-n-butyl-, O-Ethyl-O-iso-butyl-, O-n-Propyl-O-n-butyl- und O-n-Propyl-O-iso-butyl-thionophosphorsäurediesterchlorid;
O,S-Dimethyl-, O,S-Diethyl-, O,S-Di-n-propyl-, O,S-Di-iso-propyl-, O-Methyl-S-ethyl-, O-Methyl-S-n-propyl-, O-Methyl-S-iso-propyl-, O-Ethyl-S-methyl-, O-Ethyl-S-n-propyl-, O-Ethyl-S-iso-propyl-, O-n-Propyl-S-methyl-, O-n-Propyl-S-ethyl-, O-n-Propyl-S-iso-propyl-, O-iso-Propyl-S-methyl-, O-iso-Propyl-S-ethyl- und O-iso-Propyl-

S-n-propyl-thiono-thiophosphorsäurediesterchlorid.

Die Verbindungen der Formel (III) sind bekannt oder können nach allgemein üblichen bekannten Verfahren hergestellt werden (vergleiche Methoden der organischen Chemie (Houben-Weyl-Müller), 4. Aufl., Band 12/1 (1963), S. 560 - 563; Band 12/2 (1964), S. 607 - 618; Thieme-Verlag, Stuttgart).

Das erfindungsgemäße Verfahren wird vorzugsweise unter Verwendung von Verdünnungsmitteln durchgeführt. Als Verdünnungsmittel kommen praktisch alle inerten organischen Lösungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glycoldimethylether und Diglycoldimethylether, Tetrahydrofuran und Dioxan, Ketone, wie Aceton, Methylethyl-, Methyl-isopropyl- und Methylisobutylketon, Ester, wie Essigsäure-methylester und -ethylester, Nitrile, wie z.B. Acetonitril und Propionitril, Amide, wie z.B. Dimethylformamid, Dimethylacetamid und N-Methyl-pyrrolidon, sowie Dimethylsulfoxid, Tetramethylensulfon und Hexamethylphosphorsäuretriamid.

Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, ferner aliphatische, aromatische oder heterocyclische Amine, beispielsweise Triethylamin, Trimethylamin, Dimethylanilin, Dimethylbenzylamin und Pyridin.

Die Reaktionstemperatur kann innerhalb eines größeren Bereichs variiert werden. Im allgemeinen arbeitet man zwischen 0 und 150°C, vorzugsweise zwischen 10 und 100°C.

Das erfindungsgemäße Verfahren wird im allgemeinen bei Normaldruck durchgeführt.

Zur Durchführung des erfindungsgemäßen Verfahrens werden die Ausgangsstoffe gewöhnlich in angenähert äquimolaren Mengen eingesetzt. Ein größerer Überschuß der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird zweckmäßigerweise mehrere Stunden bei der erforderlichen Temperatur gerührt.

Danach gibt man ein organisches Lösungsmittel, z.B. Methylenchlorid zu und arbeitet die organische Phase wie üblich durch Waschen, Trocknen und Abdestillieren des Lösungsmittels auf.

Die neuen Verbindungen fallen in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp.,Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp.,Oryzaephilus surinamensis, Anthonomus spp., Sitophilus spp., Otiorrhynchus sulcatus, Cosmopolites sordidus, Ceuthorrhynchus assimilis, Hypera postica, Dermestes spp.,

Trogoderma spp., Anthrenus spp., Attagenus spp., Lyctus spp., Meligethes aeneus, Ptinus spp., Niptus hololeucus Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die Wirkstoffe können in die üblichen Formulierungen überführt werden, wie Lösungen, Emulsionen, Suspensionen, Pulver, Schäume, Pasten, Granulate, Aerosole, Wirkstoffimprägnierte Natur- und synthetische Stoffe, Feinstverkapselungen in polymeren Stoffen und in Hüllmassen für Saatgut, ferner in Formulierungen mit Brenn-

sätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkchole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B.

gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo - und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachs-

0056958

tumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Wirksamkeit der erfindungsgemäßen Verbindungen sei anhand der folgenden Beispiele erläutert:

Beispiel A

Laphygma-Test

Lösungsmittel: 3 Gewichtsteile Aceton

Emulgator : 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentrationen behandelt und mit Raupen des Eulenfalters (Laphygma frugiperda) besetzt, solange die Blätter noch feucht sind.

Nach der gewünschten Zeit wird die Abtötung in % bestimmt. Dabei bedeutet 100 %, daß alle Raupen abgetötet wurden; 0 % bedeutet, daß keine Raupen abgetötet wurden.

Bei diesem Test zeigen z.B. die Verbindungen der Beispiele 1 und 2 bei einer Konzentration von 0,01 % nach 3 Tagen einen Abtötungsgrad von 100 %.

Beispiel B

Myzus-Test

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden; 0 % bedeutet, daß keine Blattläuse abgetötet wurden.

Bei diesem Test zeigen z.B. die Verbindungen der Beispiele 1, 2 und 3 bei einer Konzentration von 0,1 % nach 1 Tag eine 100 %ige Abtötung.

Beispiel C

Tetranychus-Test (resistent)

| | | |
|---|---|---|
| Lösungsmittel: | 3 Gewichtsteile | Aceton |
| Emulgator: | 1 Gewichtsteil | Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden; 0 % bedeutet, daß keine Spinnmilben abgetötet wurden.

Bei diesem Test zeigt z.B. die Verbindung aus Beispiel 3 bei einer Konzentration von 0,1% eine 98%ige Abtötung.

Beispiel D

Grenzkonzentrations-Test / Bodeninsekten

Testinsekt: Phorbia antiqua-Maden im Boden
Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenenden Testsinsekten in % bestimmt. Der Wirkungsgrad ist 100 %, wenn alle Testinsekten abgetötet worden sind, er ist 0 %, wenn noch genau so viele Testinsekten leben, wie bei der unbehandelten Kontrolle.

Bei diesem Test zeigen z.B. die Verbindungen der Beispiele 1 und 2 bei einer Konzentration von 20 ppm einen Wirkungsgrad von 100 %.

Das erfindungsgemäße Verfahren soll anhand der folgenden Beispiele erläutert werden:

Beispiel 1

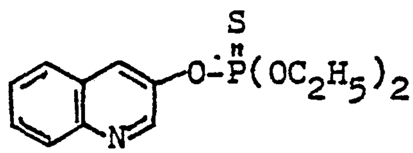

12,o g (o,o8 Mol) 3-Hydroxy-chinolin und 12 g Kaliumcarbonat werden in 1oo ml Acetonitril vorgelegt und hierzu werden 15 g (o,1 Mol) O,O-Diethyl-thionophosphorsäurediesterchlorid gegeben. Das Reaktionsgemisch wird dann 15 Stunden unter Rückfluß zum Sieden erhitzt. Nach dem Abkühlen wird mit 3oo ml Methylenchlorid verdünnt, geschüttelt, die organische Phase abgetrennt, mit Wasser gewaschen, mit Natriumsulfat getrocknet, filtriert und im Vakuum eingedampft. Der Rückstand wird bei 8o°C andestilliert. Man erhält so 2o,5 g (69% der Theorie) O,O-Diethyl-O-chinolin-3-yl-thionophosphorsäureester vom Brechungsindex $n_D^{24}$: 1,5159.

Beispiel 2

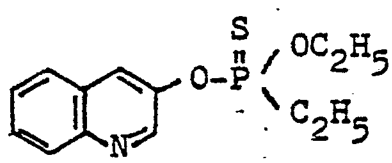

Analog Beispiel 1 erhält man bei Einsatz von14,5 g (o,1 Mol) 3-Hydroxy-chinolin, 15 g Kaliumcarbonat und 17,5 g O-Ethyl-thionoethanphosphonsäureesterchlorid bei sonst gleicher Verfahrensführung 18,o g (64% der Theorie) O-Ethyl-O-chinolin-3-yl-thionoethanphosphonsäureester vom Brechungsindex $n_D^{24}$: 1,5754.

Beispiel 3

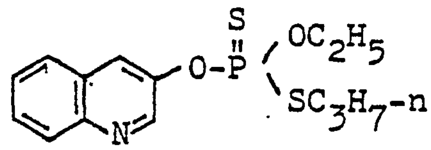

Analog Beispiel 1 erhält man bei Einsatz von 14,5 g (o,1 Mol) 3-Hydroxy-chinolin, 15 g Kaliumcarbonat und 24,4 g O-Ethyl-S-n-propyl-thiono-thiol-phosphorsäurediesterchlorid bei sonst gleicher Verfahrensführung 2o,1 g (61% der Theorie) O-Ethyl-S-n-propyl-O-chinolin-3-yl-thiono-thiol-phosphorsäureester vom Brechungsindex $n_D^{24}$: 1,5731.

Patentansprüche

1. O-Chinolin-3-yl-O-alkyl-thiono(thiol)-phosphor(phosphon)-säureester der Formel I

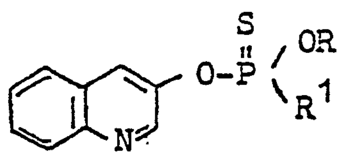

(I)

in welcher

R für gegebenenfalls substituiertes Alkyl steht und

$R^1$ für gegebenenfalls substituiertes Alkyl, Alkoxy oder Alkylthio steht.

2. Verbindungen der Formel (I) gemäß Anspruch 1, in welcher

R für Alkyl mit 1 bis 5 Kohlenstoffatomen und

$R^1$ für Alkyl, Alkoxy oder Alkylthio mit 1 bis 5 Kohlenstoffatomen steht.

3. Verbindungen der Formel (I) gemäß Anspruch 1, in welcher

R für Methyl oder Ethyl steht und

$R^1$ für Methyl, Ethyl, Methoxy, Ethoxy, n- oder i-Propoxy, Methylthio, Ethylthio und n- oder i-Propylthio steht.

4. Verbindungen der Formel (I) gemäß Anspruch 1

in welcher

R für Ethyl steht und

$R^1$ für Ethyl, Ethoxy oder n-Propylthio steht.

5. Verbindungen der Formel (I) gemäß Anspruch 1

in welcher

R für Ethyl steht und

$R^1$ für Ethoxy oder n-Propylthio steht.

6. Verfahren zur Herstellung von O-Chinolin-3-yl-O-alkyl-thiono(thiol)-phosphor(phosphon)-säureestern der Formel I

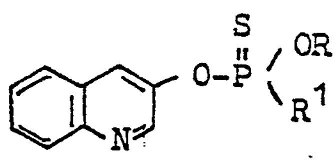

(I)

in welcher

R  für gegebenenfalls substituiertes Alkyl steht und

$R^1$  für gegebenenfalls substituiertes Alkyl, Alkoxy oder Alkylthio steht,

dadurch gekennzeichnet, daß man 3-Hydroxy-chinolin der Formel II

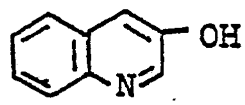

(II)

mit O-Alkyl-thiono(thiol)-phosphor(phosphon)-säureesterchloriden der Formel III

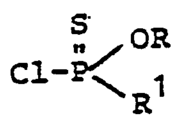

(III)

in welcher

R und $R^1$ die oben angegebene Bedeutung haben,

gegebenenfalls in Gegenwart von Säureakzeptoren und Verdünnungsmitteln umsetzt.

7. Schädlingsbekämpfungsmittel, gekennzeichnet durch einen Gehalt an mindestens einem O-Chinolin-3-yl-O-alkyl-thiono(thiol)-phosphor(phosphon)-säureester der Formel I.

8. Verwendung von O-Chinolin-3-yl-O-alkyl-thiono (thiol)-phosphor(phosphon)-säureestern der Formel I zur Bekämpfung von Schädlingen, insbesondere Insekten und Spinnentieren.

9. Verfahren zur Bekämpfung von Schädlingen, dadurch gekennzeichnet, daß man O-Chinolin-3-yl-O-alkyl-thiono(thiol)-phosphor(phosphon)-säureester der Formel I auf die Schädlinge, vorzugsweise Insekten oder Spinnentiere oder ihren Lebensraum einwirken läßt.

10. Verfahren zur Herstellung von Schädlingsbekämpfungsmitteln, dadurch gekennzeichnet, daß man O-Chinolin-3-yl-O-alkyl-thiono(thiol)-phosphor(phosphon)-säureester der Formel I mit Streckmitteln und/oder oberflächenaktiven Mitteln vermischt.

0056958

Europäisches Patentamt

# EUROPÄISCHER RECHERCHENBERICHT

Nummer der Anmeldung

EP 82 10 0250

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| D,Y | DE - A - 1 670 823 (FARBENFABRIKEN BAYER)<br>* das ganze Dokument * | 1,6-10 | C 07 F 9/60<br>A 01 N 57/16<br>57/24 |
| | -- | | |
| Y | DE - C - 883 901 (F.HOFFMANN-LA ROCHE)<br>* das ganze Dokument * | 1 | |
| | -- | | RECHERCHIERTE SACHGEBIETE (Int Cl.³) |
| Y | CHEMICAL ABSTRACTS, Band 85, No. 5, 2. August 1976, Zusammenfassung 29393w, Seite 101<br>COLUMBUS, OHIO (US)<br>& PHYTOCHEMISTRY 1976, 15(1) 29-31<br>TANIGUCHI MAKOTO u.a.: "Increase of auxin-antagonistic action in 3-phosphoryloxycarbostyrils"<br>* die ganze Zusammenfassung * | 1,7-10 | C 07 F 9/00 |
| | ----------- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 07-04-1982 | BESLIER |